# EUROPÄISCHE PATENTSCHRIFT

(11) **EP 1 535 769 B1**
(45) Veröffentlichungstag und Bekanntmachung des Hinweises auf die Patenterteilung: **29.04.2009**
(21) Anmeldenummer: 04026432.7
(22) Anmeldetag: 10.11.2004
(51) Int. Cl.: B60H 1/00, B60H 1/22

(54) **Kraftfahrzeug-Klimaanlage mit Standheizung**
Automotive air conditioner with auxiliary heater
Climatisation pour véhicule avec chauffage auxiliaire

(30) Priorität: 25.11.2003 DE 10355396
(43) Veröffentlichungstag der Anmeldung: 01.06.2005
(73) Patentinhaber: Behr GmbH & Co. KG, 70469 Stuttgart (DE)
(72) Erfinder: Misskam, Thomas, 71755 Eberdingen (DE)
(74) Vertreter: Grauel, Andreas

(56) Entgegenhaltungen:
- DE-A1- 10 146 727
- DE-A1- 19 647 935
- DE-U1- 20 304 546
- US-A- 6 040 561

## Beschreibung

Die Erfindung betrifft eine Kraftfahrzeug-Klimaanlage mit Standheizung gemäß dem Oberbegriff des Anspruchs 1.

Bekannt sind Klimaanlagen mit elektrischen Zuheizern, welche die mangelnde Heizleistung resultierend aus der niedrigen Abwärme moderner Fahrzeugmotoren kompensieren oder zur Komfortsteigerung für eine schnelle Innenraumaufheizung eingesetzt werden. Diese elektrischen Zuheizer, beispielsweise PTC-Zuheizer, werden bei laufendem Motor durch das Bordnetz versorgt. Für einen motorunabhängigen Betrieb werden diese PTC-Zuheizer aufgrund der hohen Leistungsaufnahme nicht eingesetzt. Zudem sind die herkömmlichen PTC-Zuheizer nur für den Betrieb mit einem Spannungspotential ausgelegt.

Für die Fahrzeugvorwärmung sind zusätzliche Geräte erhältlich, die nachträglich im Fahrzeuginnenraum angebracht werden und über eine Spannung aus dem öffentlichen Energieversorgungsnetz betrieben werden. Bei diesen nachträglich eingebauten Zusatzgeräten werden vorhandene Komponenten der Fahrzeugklimaanlage nicht genutzt.

Aus DE-U-203 04 546 ist eine Kraftfahrzeug-Klimaanlage mit Standheizung gemäß dem Oberbegriff des Anspruchs 1 bekannt.

Es ist Aufgabe der Erfindung, eine verbesserte Klimaanlage mit Standheizung zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Kraftfahrzeug-Klimaanlage mit Standheizung vorgesehen, die im Falle eines Kraftfahrzeug-Motor-Stillstands durch eine externe zweite Energieversorgung, insbesondere zur Energieversorgung von PTC-Heizelementen, mit Energie versorgt wird, wobei eine Vorrichtung zum Umschalten zwischen einer ersten Energieversorgung, die beispielsweise von einem Kraftfahrzeugmotor erzeugte Energie über ein Bordnetz zur Verfügung stellt, oder der externen zweiten Energieversorgung vorgesehen ist wobei für einen Betrieb mit einer niedrigen Spannung eine Parallelschaltung von Widerständen und für einen alternativen Betrieb mit einer hoher Spannung eine Serienschaltung von Widerständen vorgesehen ist. Dabei ist ein direkter Anschluss der externen Energieversorgung ohne Spannungskonvertierung zum Heizen möglich.

Bevorzugt ist eine mechanische Umschaltung, insbesondere eine Schaltwalze, oder es sind Relais zum Schalten zwischen zwei unterschiedlichen Schaltkreisen vorgesehen, welche die Vorrichtung zum Umschalten bildet bzw. bilden, so dass kein Spannungskonverter zum Heizen erforderlich ist. Dabei ist in den Schaltkreisen bevorzugt eine Mehrzahl von PTC-Heizelementen vorgesehen, die sowohl in Parallelschaltung als auch in Serienschaltung betreibbar sind, wobei in Parallelschaltung und Serienschaltung an jedem PTC-Heizelement etwa die gleiche effektive Spannung anliegt. Durch die Schaltwalze bzw. das Relais kann zwischen Parallelschaltung und Serienschaltung gewechselt werden. Da bei jedem Betrieb annähernd die gleiche effektive Spannung an jedem PTC-Element anliegt, kann deren Wirkungsgrad optimiert werden. Dabei werden unter annähernd gleich auch Abweichungen von +/- 20% verstanden, jedoch sind geringere Abweichungen wünschenswert.

Gemäß einer Ausführungsform ist eine Hilfsenergieversorgung vorgesehen, welche eine niedrigere Spannung zur Verfügung stellt als die externe Energieversorgung, wobei die niedrigere Spannung beispielsweise der normalen Bordspannung entspricht.

Im Folgenden wird die Erfindung anhand eines Ausführungsbeispiels mit Abwandlungen unter Bezugnahme auf die Zeichnung im Einzelnen erläutert. In der Zeichnung zeigen:
- Fig. 1: eine schematische teilweise Darstellung einer Schaltung in einem Betrieb, bei dem das Bordnetz elektrische Energie zur Verfügung stellt,
- Fig. 2: eine schematische teilweise Darstellung einer Schaltung in einem Betrieb, bei dem elektrische Energie von außen zur Verfügung gestellt und direkt zum Heizen verwendet wird,
- Fig. 3: eine perspektivische Darstellung einer Schaltwalze, wie sie in den Fig. 1 und 2 verwendet wird,
- Fig. 4: eine abgewickelte Darstellung der Schaltwalze von Fig. 3,
- Fig. 5: eine Darstellung einer Anordnung eines PTC-Heizelements,
- Fig. 6: eine schematische teilweise Darstellung einer alternativen Schaltung in einem Betrieb, bei dem das Bordnetz elektrische Energie zur Verfügung stellt, und
- Fig. 7: eine schematische teilweise Darstellung der Schaltung von Fig. 6 in einem Betrieb, bei dem elektrische Energie von außen zur Verfügung gestellt wird.

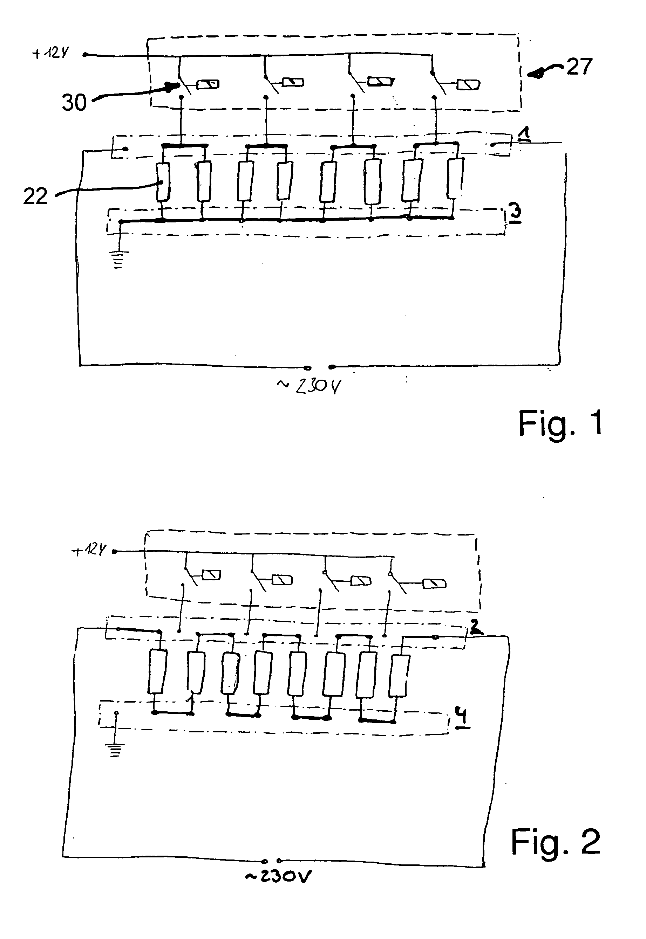

Figuren 1 und 2 zeigen eine Schaltung für eine mechanische Umschaltung 20, bei der die Wechselspannung einer externen Energieversorgung ("ground power supply"), vorliegend einer 230 V Wechselstromquelle, direkt an PTC-Heizelementen 22 anliegt. Um die PTC-Heizelemente 22 vor einer Überlastung zu schützen und sowohl im Bordnetzspannungsbetrieb als auch im Fremdspannungsbetrieb betreiben zu können, wird gemäß dem beschriebenen Ausführungsbeispiel die mechanische Umschaltung 20 verwendet. Fig. 1 zeigt den Bordnetzspannungsbetrieb, das heißt, dass die elektrische Spannung durch den Fahrzeugmotor beispielsweise über einen Generator erzeugt wird, und Fig. 2 zeigt den Fremdspannungsbetrieb, das heißt, dass die elektrische Spannung von außen zugeführt wird. Gemäß dem vorliegenden Ausführungsbeispiel stellt das Bordnetz eine Gleichspannung im Bereich von 12 V bis 14 V zur Verfügung, während die Fremdspannung 230 V Wechselspannung aufweist.

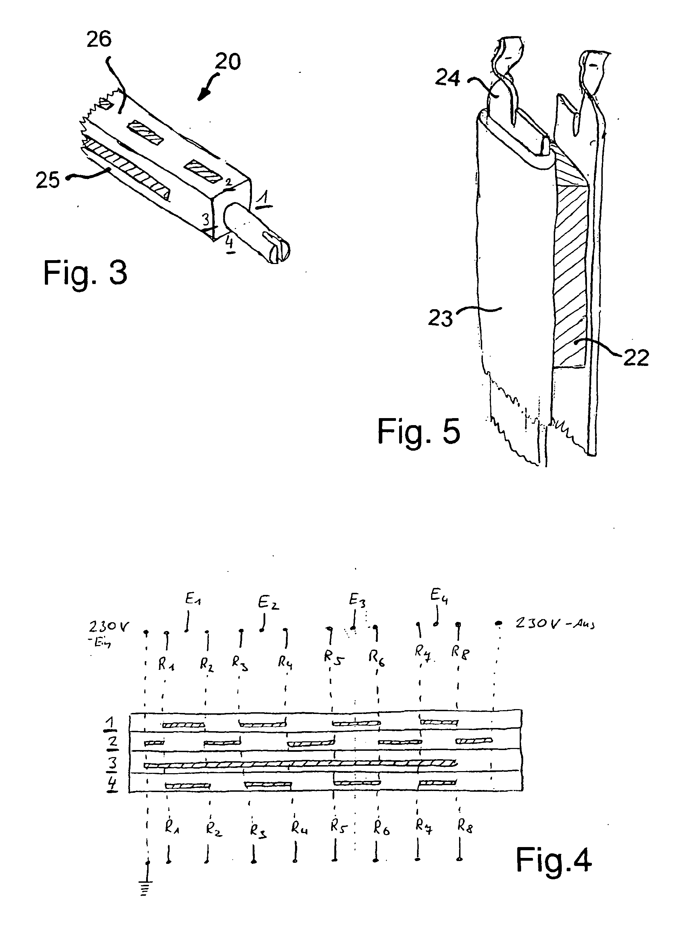

Um zwischen Rippen (nicht dargestellt) eines Heizkörpers angeordnete PTC-Heizelemente 22 (siehe Fig. 5), welche über mit einer Isolierung 23 gegen die Masse versehene Kontaktbleche 24 elektrisch leitend verbunden sind, sowohl im Bordnetzspannungsbetrieb als auch im Fremdspannungsbetrieb zu betreiben, ist ein Schaltelement vorgesehen, das im dargestellten Ausführungsbeispiel als Schaltwalze 25 mit einer entsprechenden Kontaktierung ausgeführt ist (siehe insbesondere Fig. 4). Je nach Betriebsart wird die Schaltwalze 25 ausgerichtet Entgegen der Darstellung von Fig. 3 kann die Schaltwalze 25 auch zylinderförmig ausgebildet sein, was die Verstellbarkeit erleichtert. In den Figuren 1 bis 4 sind die einzelnen Flächen 26 der Schaltwalze 25 zum besseren Verständnis mit 1 bis 4 bezeichnet.

Im Betrieb mit Bordspannung, das heißt vorliegend mit 12 V Gleichstrom, werden über Schalter 30 eine Mehrzahl von Kontakten über einen PTC-Regler 27 geschlossen und die Schaltwalze 25 entsprechend Fig. 1 positioniert, wobei vorliegend je zwei PTC-Heizelemente 22 parallel geschaltet sind. Insgesamt sind sechzehn PTC-Heizelemente 22 vorgesehen. Gemäß dem vorliegenden Ausführungsbeispiel liegt somit an jedem PTC-Heizelement 22 eine Spannung von ca. 12 V an. Der Wechselspannungsschaltkreis ist bei dieser Stellung der SchaltWalze 25 unterbrochen. Die Anzahl der für die Spannungsübersetzung erforderlichen PTC-Heizelemente ist vom Spannungsverhältnis der externen Spannung zur Bordnetzspannung und von den Eigenschaften der verwendeten PTC-Heizelemente abhängig. Wird beispielsweise im vorliegenden Fall eine externe Wechselspannung von 110 V benutzt, dann verringert sich die Anzahl der benötigten PTC-Heizelemente auf acht.

Wird die Schaltwalze 25 um 90° gedreht (Fig. 2), so liegt eine Serienschaltung aller sechzehn PTC-Heizelemente 22 vor, wobei diese mäanderartig miteinander verbunden sind, so dass wiederum eine geeignete Spannung an jedem einzelnen PTC-Heizelement 22 anliegt.

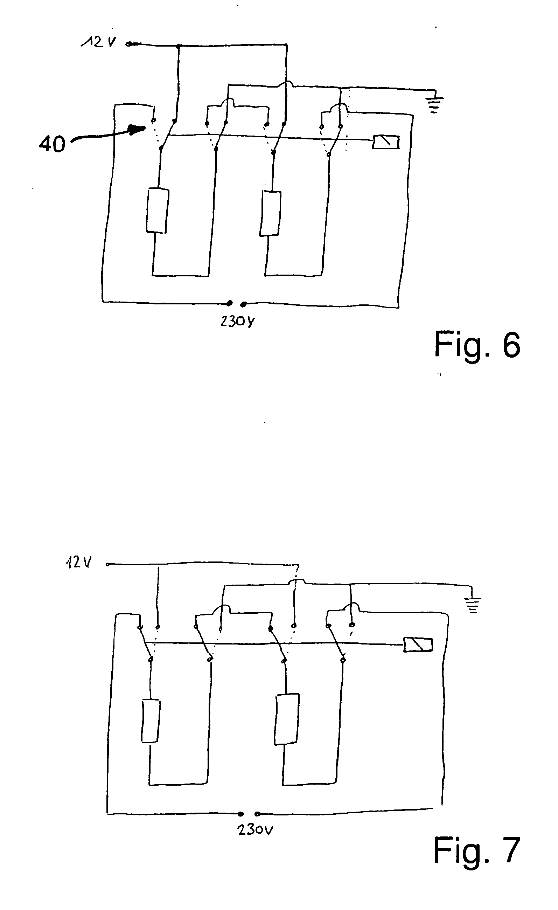

In den Figuren 6 und 7 ist als weitere alternative Ausführungsform eine entsprechende Schaltung mit Relais 40 vorgesehen, wobei wiederum sechzehn PTC-Heizelemente 22 vorgesehen sind, die im Bordnetzspannungsbetrieb bei 12 V Gleichspannung parallel geschaltet und beim Fremdspannungsbetrieb bei direkt angelegter 230 V Wechselspannung in Serie geschaltet sind.

Kombinationen von Parallel- und Serienschaltungen zur Erzeugung einer geeigneten Spannung für die einzelnen PTC-Heizelemente sind möglich. So können beispielsweise stets zwei PTC-Heizelemente in Serie geschaltet sein.

### Bezugszeichenliste

- 20: mechanische Umschaltung
- 22: PTC-Heizelement
- 23: Isolierung
- 24: Kontaktblech
- 25: Schaltwalze
- 26: Fläche
- 27: PTC-Regler
- 30: Schalter
- 40: Relais

## Patentansprüche

1. Kraftfahrzeug-Klimaanlage mit Standheizung für einen Betrieb der Kraftfahrzeug-Klimaanlage im Falle eines Kraftfahrzeug-Motor-Stillstands durch eine externe Energieversorgung, insbesondere zur Energieversorgung von PTC-Heizelementen (22), wobei eine Vorrichtung zum Umschalten zwischen einer ersten Energieversorgung mit einem ersten Spannungspotential oder einer externen zweiten Energieversorgung mit einem zweiten Spannungspotential vorgesehen ist, **dadurch gekennzeichnet, dass** für einen Betrieb mit einer niedrigen Spannung eine Parallelschaltung von Widerständen und für einen alternativen Betrieb mit einer hohen Spannung eine Serienschaltung von Widerständen vorgesehen ist.

2. Kraftfahrzeug-Klimaanlage nach Anspruch 1, **dadurch gekennzeichnet, dass** die erste Energieversorgung eine Gleichspannung aus einem Kraftfahrzeugbordnetz zur Verfügung stellt und die zweite Energieversorgung eine externe Wechselspannung zur Verfügung stellt.

3. Kraftfahrzeug-Klimaanlage nach Anspruch 1 oder 2, **dadurch gekennzeichnet, dass** eine mechanische Umschaltung (20), insbesondere eine Schaltwalze (25), oder Relais (40) zum Schalten zwischen zwei unterschiedlichen Schaltkreisen vorgesehen ist, welche die Vorrichtung zum Umschalten bildet bzw. bilden.

4. Kraftfahrzeug-Klimaanlage nach einem der vorhergehenden Ansprüche, **dadurch gekennzeichnet, dass** zumindest ein Teil der Widerstände durch PTC-Heizelemente (22) gebildet ist.

5. Kraftfahrzeug-Klimaanlage nach einem der vorhergehenden Ansprüche, **dadurch gekennzeichnet, dass** das Kraftfahrzeugbordnetz eine niedrigere Spannung zur Verfügung stellt als die externe Energieversorgung.

6. Kraftfahrzeug-Klimaanlage nach einem der vorhergehenden Ansprüche, **dadurch gekennzeichnet, dass** eine Mehrzahl von PTC-Heizelementen (22) vorgesehen ist, die sowohl in Parallelschaltung als auch in Serienschaltung betreibbar sind, wobei die Schaltkreise derart ausgebildet sind, dass in Parallelschaltung und in Serienschaltung an jedem PTC-Heizelement (22) annähernd die gleiche effektive Spannung anliegt.

7. Verfahren zum Betreiben einer Kraftfahrzeug-Klimaanlage (1) gemäß einem der vorhergehenden Ansprüche, wobei bei Vorhandensein einer externen Energieversorgung die Standheizung im Falle eines Kraftfahrzeug-Motor-Stillstands direkt mit der externen Energieversorgung betrieben wird.

8. Verfahren nach Anspruch 7, **dadurch gekennzeichnet, dass** zwischen dem Betrieb mit dem Kraftfahrzeugbordnetz oder dem Betrieb mit externer Energieversorgung mittels einer mechanischen Umschaltung (20), insbesondere einer Schaltwalze (25), oder eines Relais (40) umgeschaltet wird.

9. Verfahren nach Anspruch 8, **dadurch gekennzeichnet, dass** für den Betrieb mit dem Kraftfahrzeugbordnetz eine Reihe von PTC-Heizelementen (22) parallel geschaltet werden.

10. Verfahren nach einem der Ansprüche 7 bis 9, **dadurch gekennzeichnet, dass** für den Betrieb mit externer Energieversorgung eine Reihe von PTC-Heizelementen (22) in Serie geschaltet werden.

## Claims

1. Automotive air conditioner with auxiliary heater for operating, by means of an external energy supply, in particular for the power supply of PTC heating elements (22), the automotive air conditioner while the engine of a motor vehicle is stopped, wherein a device is provided for switching between a first power supply with a first electric potential and an external second power supply with a second electric potential, **characterised in that** a parallel connection of resistors is provided for operation at a low voltage and a series connection of resistors is provided for alternative operation at a high voltage.

2. Automotive air conditioner according to claim 1, **characterised in that** the first power supply provides a DC voltage from an automotive electrical system, while the second power supply provides an external AC voltage.

3. Automotive air conditioner according to claim 1 or 2, **characterised in that** a mechanical change-over device (20), in particular a controller cylinder (25) or a relay (40), is provided for switching between two different circuits and forms the device for switching over.

4. Automotive air conditioner according to any of the preceding claims, **characterised in that** at least a part of the resistors is represented by PTC heating elements (22).

5. Automotive air conditioner according to any of the preceding claims, **characterised in that** the automotive electrical system provides a lower voltage than the external power supply.

6. Automotive air conditioner according to any of the preceding claims, **characterised in that** a plurality of PTC heating elements (22) is provided, which can be operated both in parallel connection and in series connection, the circuits being designed such that approximately identical root-mean-square voltages are applied to each PTC heating element (22) both in parallel connection and in series connection.

7. Method for operating an automotive air conditioner (1) according to any of the preceding claims, wherein the auxiliary heater is operated directly from the external power supply, if provided, while the engine of the motor vehicle is stopped.

8. Method according to claim 7, **characterised in that** the change-over between operation from the automotive electrical system and operation from the external power supply is effected by means of a mechanical change-over device (20), in particular a controller cylinder (25) or a relay (40).

9. Method according to claim 8, **characterised in that** several PTC heating elements (22) are connected in parallel for operation from the automotive electrical system.

10. Method according to any of claims 7 to 9, **characterised in that** several PTC heating elements (22) are connected in series for operation from the external power supply.

## Revendications

1. Système de climatisation d'un véhicule automobile comprenant un chauffage indépendant pour un fonctionnement du système de climatisation du véhicule automobile dans le cas d'un arrêt du moteur du véhicule automobile, fonctionnement obtenu grâce à une alimentation en énergie extérieure, servant en particulier à l'alimentation en énergie d'éléments chauffants (22) à coefficient de température positif (CTP), où il est prévu un dispositif servant à l'inversion entre une première alimentation en énergie ayant un premier potentiel de tension, ou bien une deuxième alimentation en énergie extérieure ayant un deuxième potentiel de tension,
**caractérisé en ce qu'**il est prévu, pour un fonctionnement avec une basse tension, des résistances montées en parallèle, et, pour un autre fonctionnement avec une haute tension, des résistances montées en série.

2. Système de climatisation d'un véhicule automobile selon la revendication 1, **caractérisé en ce que** la première alimentation en énergie fournit une tension continue à partir d'un réseau de bord du véhicule automobile, la deuxième alimentation en énergie fournissant une tension alternative extérieure.

3. Système de climatisation d'un véhicule automobile selon la revendication 1 ou 2, **caractérisé en ce qu'**il est prévu une inversion mécanique (20), en particulier un cylindre de commutation (25), ou bien des relais (40), servant à la commutation entre deux circuits différents, cylindre de commutation ou relais qui forme(nt) le dispositif d'inversion.

4. Système de climatisation d'un véhicule automobile selon l'une quelconque des revendications précédentes, **caractérisé en ce qu'**au moins une partie des résistances est formée par des éléments chauffants (22) à coefficient de température positif (CTP).

5. Système de climatisation d'un véhicule automobile selon l'une quelconque des revendications précédentes, **caractérisé en ce que** le réseau de bord du véhicule automobile fournit une tension plus basse que l'alimentation en énergie extérieure.

6. Système de climatisation d'un véhicule automobile selon l'une quelconque des revendications précédentes, **caractérisé en ce qu'**il est prévu une pluralité d'éléments chauffants (22) à coefficient de température positif (CTP) qui peuvent fonctionner aussi bien dans un montage en parallèle que dans un montage en série, où les circuits sont configurés de manière telle, que dans un montage en parallèle et dans un montage en série, presque la même tension effective s'applique sur chaque élément chauffant (22) à coefficient de température positif (CTP).

7. Procédé de fonctionnement d'un système de climatisation (1) d'un véhicule automobile selon l'une quelconque des revendications précédentes, où, en présence d'une alimentation en énergie extérieure, le chauffage indépendant, dans le cas d'un arrêt du moteur du véhicule automobile, fonctionne directement avec l'alimentation en énergie extérieure.

8. Procédé selon la revendication 7, **caractérisé en ce que** le passage entre le fonctionnement avec le réseau du bord du véhicule automobile, ou bien le fonctionnement avec une alimentation en énergie extérieure, est commandé au moyen d'une inversion mécanique (20), en particulier au moyen d'un cylindre de commutation (25) ou d'un relais (40).

9. Procédé selon la revendication 8, **caractérisé en ce qu'**il est prévu, pour le fonctionnement avec le réseau de bord du véhicule automobile, une rangée d'éléments chauffants (22) à coefficient de température positif (CTP), montés en parallèle.

10. Procédé selon l'une quelconque des revendications 7 à 9, **caractérisé en ce qu'**il est prévu, pour le fonctionnement avec une alimentation en énergie extérieure, une rangée d'éléments chauffants (22) à coefficient de température positif (CTP), montés en série.
